# EUROPEAN PATENT APPLICATION

(11) **EP 1 683 740 A1**
(43) Date of publication of application: **26.07.2006**
(21) Application number: 05001312.7
(22) Date of filing: 24.01.2005
(51) Int. Cl.: B65D 85/32, B29C 51/30

(54) **Package comprising windows**

(71) Applicant: BRODRENE HARTMANN A/S, 2600 Kgs Lyngby (DK)
(72) Inventor: Buckley, Nick, Watford Hertfordshire WD17 4GE (GB)
(74) Representative: Roerboel, Leif

(57) **Abstract**

The invention relates generally to packages for fragile products, such as eggs, where the package is made of an opaque material such as moulded pulp and particularly to such packages provided with means allowing visual inspection of the contents of the package. According to a specific embodiment, the package is thus provided with a window portion (10) located centrally in the top surface (6) of the cover part (3), where the window portion comprises a number of apertures (12) through the top surface located and dimensioned to provide for visual inspection of each of the eggs in the package. According to one embodiment, these apertures extend only into the window portion itself but according to another embodiment the apertures also extend into a vertical rim portion (11) surrounding the window portion (10). The window portion (10) can be provided with laterally extending brace members (16) in order to increase the strength and rigidity of the window potion.

## Description

### TECHNICAL FIELD

The invention relates generally to packages for fragile products, such as eggs, where the package is made of an opaque material such as moulded pulp and particularly to such packages provided with means allowing visual inspection of the contents of the package.

### BACKGROUND ART

Packages for fragile products, such as eggs, are often made by moulding of an opaque material such as pulp, which yields strong and durable packages well suited to contain and protect such fragile products. Often such packages are formed as an integral unit comprising a bottom part provided with a number of compartments for accommodating the articles and a cover part connected to the bottom part by means of a flexible hinge portion.

A drawback with packages entirely made of an opaque material such as pulp is that a customer gets no indication as to the contents of the package and that he can not visually inspect the contents of the package. In order to get a clearer indication of the contents of the package, WO 03/086905 A1 describes a package for eggs comprising portions on the cover part of the package, the shape of which resembles the shape of corresponding portions of the eggs contained in the package. This gives a clear visual indication of the content of the package no matter from which direction the package is being viewed, also in cases where at lot of packages are stacked for instance in a retail shop. However said egg-shaped portions on the cover part are still made of the same opaque material as the remainder of the package (and are in fact an integral part of the package) and hence a customer/consumer does not have the possibility of visual inspection of the eggs in the package without having to open the package.

### SUMMARY OF THE INVENTION

On the above background it is an object of the present invention to provide a display and distribution packaging unit where at least portions of the outer surface of the unit reflect the shape of the articles contained in the unit and where the unit furthermore is provided with means for visual inspection of at least chosen portions of the articles contained in the unit.

Provision of said means for visual inspection could comprise one or more windows or apertures provided in chosen window portions of the cover part. Such window portions could potentially weaken the cover part and it is hence an object of the present invention to provide window portions of a sufficiently strong structure to prevent or reduce said weakening effect of window portions on the cover part and still be able to keep the window portions as large as possible, in order to be able to see the largest possible portions of the articles contained in the package.

It is to be understood that in the present context the term "window portion" refers to the whole portion of the package which comprises both at least one opening or aperture through the wall of the package as well as the whole structure used for instance to separate a number of such apertures from another and to provide strength to the window portion. Thus, a window portion is generally a three dimensional structure comprising suitable apertures, which may if desired be covered with a transparent material as mentioned below, although planar, i.e. two dimensional window portions could also be envisaged.

According to the invention the above objects are attained by a display and distribution packaging unit (which could be used for eggs, although other applications would also be possible), which is made of an opaque material, e.g. moulded pulp and comprising:
- a bottom part comprising non-planar side surfaces of compartments so as to match at least partially the outer contours of the eggs contained within said unit;
- a cover part comprising a top surface and substantially planar front- and rear surfaces;
- where said cover part comprises portions reflecting the shape of the eggs contained within said unit, said portions being located on substantially planar end faces of said cover part at either one or both longitudinal ends of the cover part,
where the cover part furthermore comprises one or more window portion(s) for enabling visual inspection of at least a portion of the surface of the articles contained in the packaging unit.

According to a specific embodiment of the invention, said window portion(s) is/are provided in said top surface of the cover part.

According to the invention the window portion can comprise one or more apertures through the top surface of the cover part or could alternatively comprise portions of transparent material in corresponding apertures in the top surface. The window portion can either be planar and substantially flush with the top surface or could comprise a more complex 3-dimensional structure, for instance extending from the top surface and a certain distance into the interior of the unit. By suitable design of the structure of the window portion it is possible to add additional strength and rigidity to the unit compared with a unit comprising a planar top surface or to provide increased strength and rigidity to the window portion itself. Different exemplary embodiments of window portions will be presented in the detailed description of the invention.

The window portion in the top surface of the cover part should have sufficient extension and shape to allow the desired visual inspection of the articles contained in the unit. It will, however, often be desirable also to have access to relatively large substantially planar portions of the top surface upon which various graphical or pictorial information could be provided. In such cases a suitable compromise between the dimensions and shape of the window portion and the remaining area of the top surface must be made and the window portion could for instance be centrally located in the top surface, thus allowing visual inspection of articles located on either side of the window portion. Such centrally located window portions will be described in detail in the detailed description of the invention, but it is understood that other offset positions of window portions would also fall within the scope of the present invention.

As mentioned above either one or more window portions may be provided in the top surface of the cover part, each of these portions comprising one or more apertures for visual inspection of the interior of the unit. As mentioned, the individual apertures may either be open or filled/covered by a transparent material.

The provision of one or more window portions in the cover part can furthermore be used for providing the packaging unit with individual designs according to specific user requirements. Such "private window solutions" can be obtained during the moulding process of the units for instance by an interchangeable part of the moulding tool. Thus, different, individual designs of the structure of the windows can be attained as well as of the surface texture of the window portions. The window portions can also if required be provided with text or other graphical designs by individual embossment of the surfaces of the window portions or indeed of any of the surfaces of the display and distribution packaging unit. Individual design of window portions or other portions is basically not restricted to the packaging unit according to the present invention and could be utilised in other packaging units as well.

According to a second aspect, the present invention also relates to a method of providing individually chosen designs of window portions in packaging units, the method comprising moulding the units using a moulding tool provided with an interchangeable part which can be chosen and incorporated into the tool for moulding a unit with the specifically desired design. The utilisation of a moulding tool with an interchangeable part which can be chosen according to specific design requirements relating to the window portions could be an advantageous solution instead of using individual moulding tools for each unit with different designs of window portions.

### BRIEF DESCRIPTION OF THE DRAWINGS

The invention will be better understood by reference to the following drawings showing non-limiting embodiments of the display and distribution package according to the invention and where
figure 1 is a perspective view from above of a first embodiment of a display and distribution packaging unit according to the invention;
figure 2 is a perspective view from below of the embodiment of the invention shown in figure 1;
figure 3 is a plane view from above of the embodiment of the invention shown in figures 1 and 2;
figure 4 is a CAD picture illustrating the details of the window portion of the embodiment of figures 1, 2 and 3 more clearly;
figure 5 is photo of the cover part of a second embodiment of the invention shown in perspective view comprising alternatively shaped window apertures; and
figure 6 is a plane view from above of another embodiment of the packaging unit according to the invention comprising two window portions in the top surface of the cover part.

### DETEILED DESCRIPTION OF THE INVENTION

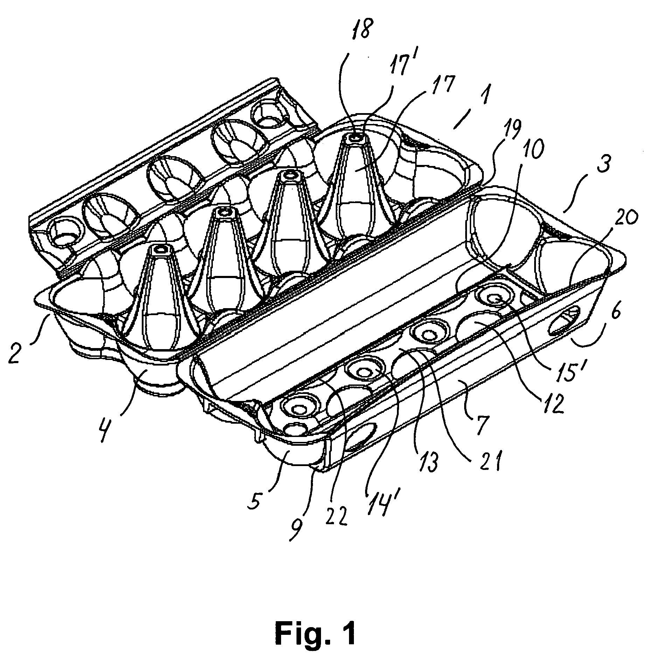

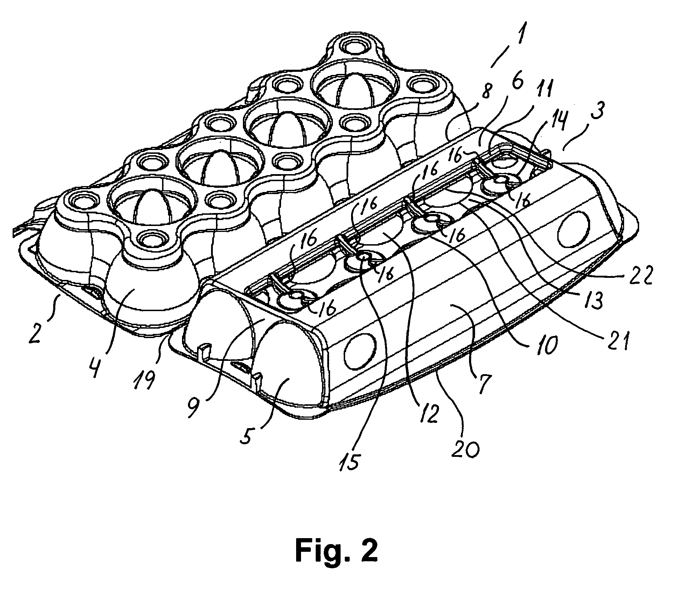

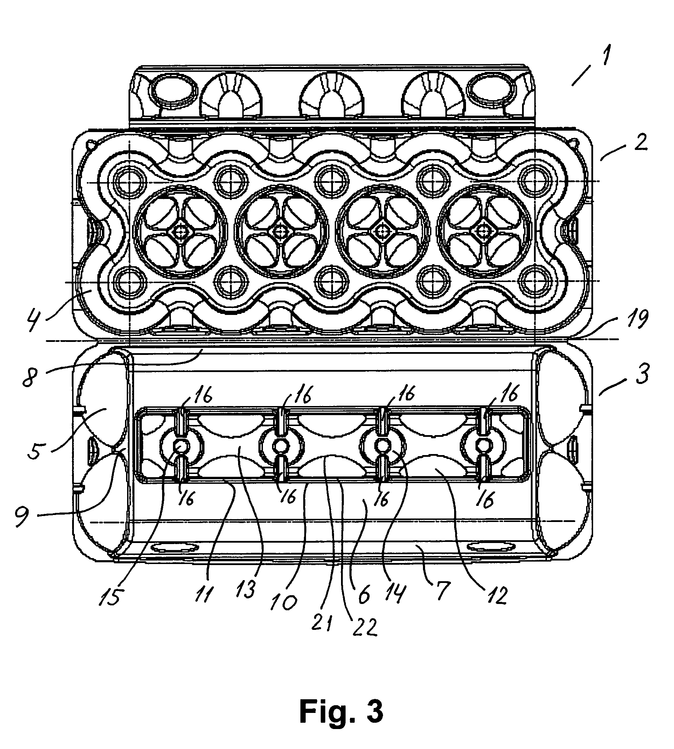

Referring to figure 1 there is shown a display and distribution packaging unit according to a specific embodiment of the invention. This embodiment comprises two longitudinally extending rows, each containing 5 compartments 4 to accommodate eggs. It is, however, understood that other embodiments of the invention could comprise different numbers of rows and compartments without deviating from the display and distribution package according to the present invention. The specific embodiment of the invention shown in figures 1, 2 and 3 is generally indicated by 1 and comprises a bottom part 2 and a cover part 3 connected to each other by means of a hinge portion 19. The bottom part 2 comprises a number of compartments 4 shaped in accordance with the intended contents of the package, in the shown embodiment eggs. The bottom part is furthermore provided with a number of upstanding posts 17 with top surfaces 17', as it is well known within the art. The cover part 3 comprises egg-shaped portions 5 formed on substantially planar end faces 9 of the cover part 3. The cover part 3 furthermore comprises a top surface 6, which is preferably substantively planar, and front and rear surfaces 7 and 8.

According to the embodiment of the present invention shown in the figures, the cover part 3 is furthermore provided with a window portion generally designated by 10, said window portion comprising a number of apertures 12 for visual inspection of the contents of the packaging unit. From the point of view of simplicity of production it is advantageous that the apertures are left open but the provision of a suitable transparent material covering the apertures could also be possible and would not constitute a deviation for the inventive concept. More details of the shapes and functions of the apertures 12 will be given below.

As mentioned the window portion 10 could be flush with the top surface 6 of the cover part 3 but according to a preferred embodiment, the window portion 10 is surrounded by a vertical rim portion 11 connecting the top surface 6 with a central structure of the window portion, which central structure thus becomes located below the level of the top surface 6.

The central structure according to the embodiment of the invention shown in figures 1, 2 and 3 comprises a number of suitably shaped apertures 12 for visual inspection of the contents of the packaging unit. These apertures 12 are located on either side of a longitudinal centre portion 13 and in the shown embodiment actually symmetrical about this portion. The longitudinal centre portion 13 is provided with centre portions 14 in alignment with and with their bottom parts 14' resting against the top surfaces 17' of the posts 17 when the packaging unit is in an closed condition. In order to reduce the possibility of the unit, i.e. the possibility of the cover part undergoing a horizontal displacement relative to the bottom part, the bottom parts 14' of the central portions 14 can be provided with studs for engagement with similarly shaped holes 18 or indentations formed in the top surface 17' of the posts 17. The inverse, i.e. studs on the top surfaces 17' and holes/indentations in the bottom part of the central portions 14 are of course also possible.

From each of said centre portions 14 extend laterally brace members 16 preferably in the form of arched members extending from the centre portions 14 to the top surface 6 of the cover part 3. These brace members 16 serves the important function of increasing the rigidity and overall strength of the window portion as such and thereby also of the cover part as a whole.

Returning to the shape of the apertures 12 in the window portion 10, these apertures can have a number of different shapes. Thus, according to the first embodiment of the invention shown in figures 1, 2, 3 and 4 the apertures are essentially of the shape of a segment of a circle, with the circular edge 21 of the aperture facing the longitudinal centre portion 13 of the window structure. The apertures extend laterally to a horizontal rim portion 27 extending substantially in parallel with the top surface 6 of the cover part 3 at a level below the top surface determined by the height of the vertical rim portion 11. The circular edge 21 resembles to some extent the shape of the arched lower edge 20 of front surface 7, thus adding to the unified appearance of the packaging unit.

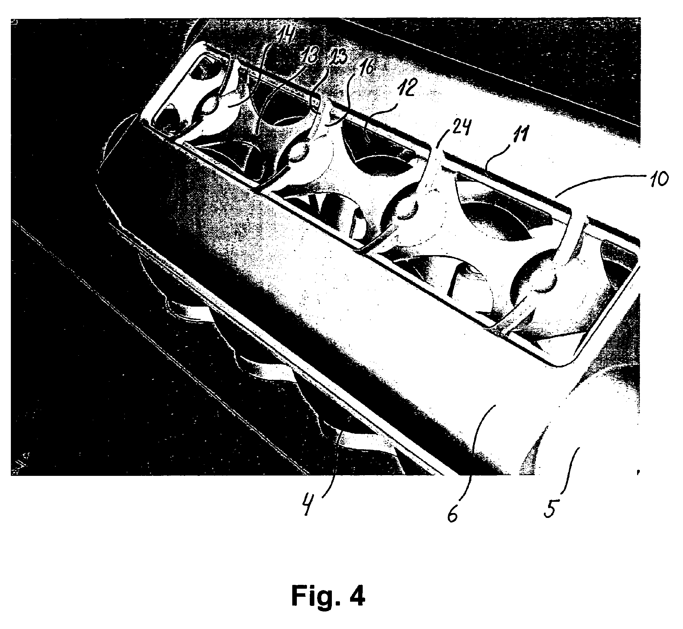

As mentioned according to the embodiment shown in figures 1, 2, 3 and 4, bracing members 16 extend laterally on either side of the central portions 14 in order to increase the rigidity and strength of the window and cover part. The shape of these bracing members 16 is most apparent from the perspective view shown in figure 4. As it appears, the bracing members 16 form 3-dimensional beam structures connecting the centre portions 14 and the vertical rim portion 11 and comprising arched upper surfaces 23 extending entirely up to the level of the top surface 6 of the bottom part 3. The arched shape of the bracing members 16, which during the moulding process of the packaging unit can be filled with pulp, strengthens the bracing members 16 and when the packaging unit is in a closed condition, where the posts 17 rest against the central portions 14, the bracing members 16 thus effectively prevent the depression of the top surface 6 of the cover part 3. Also the vertical rim portion 11 tends to reduce depression of the top surface 6 when this surface is subjected to a downward force.

The linear edge portion 22 of the apertures 12 of the embodiment shown in figures 1, 2, 3 and 4 prevents the eggs 29 from actually penetrating the plane of the apertures 12 according to the above embodiment of the invention. Thus, according to this embodiment the apertures form windows above the eggs contained in the packaging unit for visual inspection of the eggs.

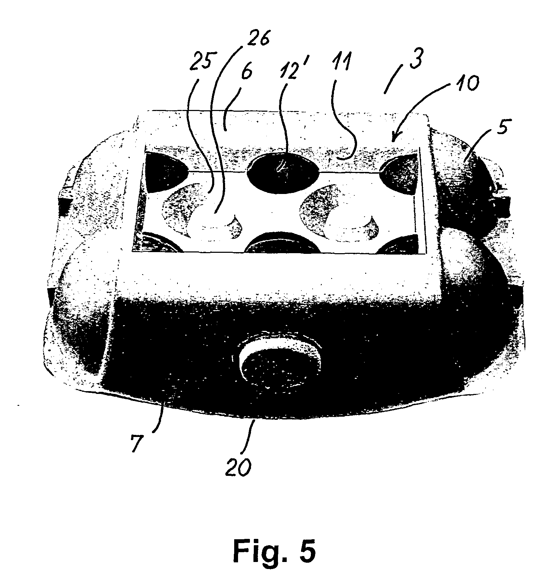

With reference to figure 5 there is shown the cover part 3 of an alternative embodiment of the packaging unit according to the present invention exemplified by a unit comprising 2 rows of 3 compartments. It is, however, understood that other numbers of rows and/or compartments could also be comprised. The difference between the first embodiment shown in figures 1, 2, 3 and 4 and the second embodiment shown in figure 5 resides in the particular structure of the window portion 10. As in the first embodiment, the window portion comprises a longitudinal centre portion 13 provided with central portions 25, 26 corresponding to the central portions 14, 15 of the first embodiment for co-operation with the posts (not shown in figure 5) in a manner similar to that described in connection with the first embodiment. Specifically the retainment portions 26 retain the central portions 25 to the top of the posts, thus preventing lateral displacement of the cover part relative to the bottom part when the unit is in a closed condition. Furthermore, as in the first embodiment, the window portion is bounded by a vertical rim portion 11.

The main difference between the second and the first embodiment is the shape and extent of the apertures, where the apertures of the second embodiment are referred to by reference numeral 12'. As shown in figure 5, the apertures 12' extend not only into the longitudinal centre portion 13 as in the first embodiment but also upwards into the vertical rim portion 11. Each of these portions of the apertures are bounded by curved (for instance circular) edges 30 and 31, respectively, and this design makes it possible for the eggs contained in the unit actually to penetrate the apertures and - provided appropriate dimensions and curvatures of the apertures are chosen - be supported by the curved edges 30, 31, thus yielding a better overall support of the eggs contained in the unit.

Although two specific designs of the window portions 10 have been shown and described above, it is understood that numerous other shapes may be conceived by a person skilled in the art without deviation from the scope of the present invention.

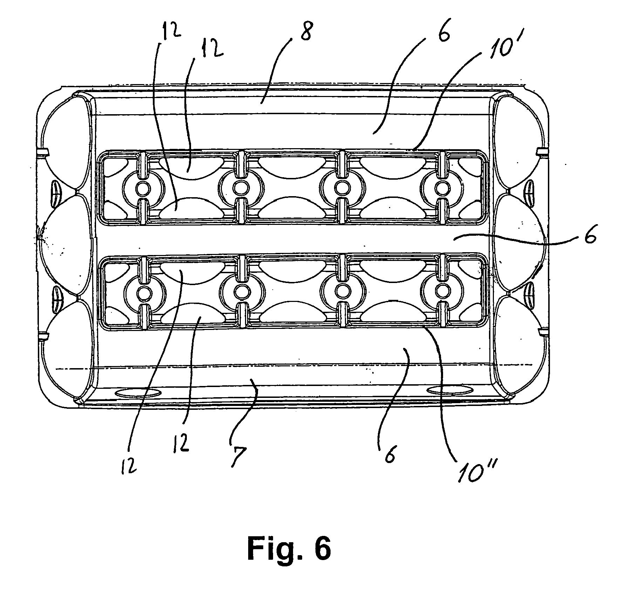

Referring to figure 6 there is shown a further alternative embodiment of the packaging unit according to the invention. In this embodiment, the top surface 6 of the cover part is provided with two window portions 10' and 10", thus subdividing the top surface into three subsurfaces upon which text, pictures or other information can be provided. As mentioned at least chosen surfaces of the window portions can also be provided with graphical or pictorial information, for instance identifying the particular company using the packaging unit. The top surface can also be covered with a suitable label provided with openings giving access to the window portions, and such labels may optionally extend downwards into the front and rear surface 7 and 8 of the packaging unit. In the specific embodiment shown in figure 6 a pattern of apertures is provided making visual inspection of all of the eggs contained in the unit possible. It is of course understood that the invention also covers larger units comprising more than three rows and five eggs in each row and that the number and placement of window openings could be adapted to such larger packaging units without deviation from the inventive concept.

### LIST OF REFERENCE NUMERALS

- 1.: Packaging unit
- 2.: Bottom part
- 3.: Cover part
- 4.: Compartments
- 5.: Egg-shaped portions
- 6.: Top surface of cover part
- 7.: Front surface
- 8.: Rear surface
- 9.: Planar end face
- 10.: Window portion
- 11.: Vertical rim portion
- 12.: Aperture in window portion
- 13.: Longitudinal centre portion
- 14.: Centre portion
- 14'.: Bottom part of centre portion
- 15.: Stud portion
- 15'.: Bottom part of stud portion
- 16.: Brace member
- 17.: Top surface of post
- 18.: Hole in top surface of post
- 19.: Hinge portion
- 20.: Arched lower edge of front surface
- 21.: Circular edge of aperture
- 22.: Linear edge portion of aperture
- 23.: Arched upper surface of brace member
- 24.: Interface between 23 and 6
- 25.: Central portion of second embodiment
- 26.: Retainment portion of 25
- 27.: Horizontal rim portion
- 28.: Egg

## Claims

1. A display and distribution packaging unit for eggs or similar fragile articles, said unit being made of an opaque material, e.g. moulded pulp and comprising:
- a bottom part (2) comprising non-planar side surfaces of compartments (4) so as to match at least partially the outer contours of the eggs contained within said unit;
- a cover part (3) comprising a top surface (6) and substantially planar front- and rear surfaces (7, 8);
- where said cover part (3) comprises portions (5) reflecting the shape of the eggs contained within said unit, said portions (5) being located on substantially planar end faces (9) of said cover part (3) at either one or both longitudinal ends of the cover part (3),
**characterised in that** said cover part (3) furthermore comprises one or more window portions (10) for enabling visual inspection of at least a portion of the surface of the articles contained in the packaging unit.

2. A unit according to claim 1, **characterised in that** said one or more window portion(s) is/are provided in said top surface (6) of the cover part (3).

3. A unit according to claim 2, **characterised in that** said one or more window portions (10) are provided centrally in the top surface (6) of the cover part (3).

4. A unit according to claim 1, **characterised in that** said one or more window portions (10) is/are surrounded by a vertical rim portion (11).

5. A unit according to claim 1, **characterised in that** said one or more window portion(s) comprise(s) a number of apertures (12) for visual inspection of the contents of the unit.

6. A unit according to claim 1, **characterised in that** said one or more window portion(s) comprise(s) a longitudinal centre portion (13) with centre portions (14) connected to the edge of the window portion by means of brace members (16).

7. A unit according to claim 6, **characterised in that** said brace members (16) are arched.

8. A unit according to claim 6, **characterised in that** said centre portions (14) rest against the top surfaces (17) of posts provided between compartments in the bottom part (2) when the unit is in the closed condition.

9. A unit according to claim 8, **characterised in that** said centre portions (14) on the bottom part (14') hereof are provided with retainment means for interaction with corresponding means (18) in the top surface (17) of the posts.

10. A unit according to claim 5, **characterised in that** said apertures (12) are shaped as substantively planar segments of a circle, with the circular edge (21) of the aperture (12) facing the longitudinal centre portion 13 of the window portion (10).

11. A unit according to claim 5, **characterised in that** said apertures (12) are shaped as two substantively interconnecting planar segments of a circle, one extending into the longitudinal centre portion (13) and the other extending into the vertical rim portion (11).

12. A unit according to any of the preceding claims, **characterised in that** one or more window portions (10) is/are designed according to specific, individual user requirements.

13. A method of providing individually chosen designs of window portions in packaging units, the method comprising moulding the units using a moulding tool provided with an interchangeable part which can be chosen and incorporated into the tool for moulding a unit with the specifically desired design.
